# EUROPEAN PATENT SPECIFICATION

(11) **EP 3 633 096 B1**
(45) Date of publication and mention of the grant of the patent: **31.01.2024**
(21) Application number: 18805931.5
(22) Date of filing: 24.05.2018
(51) Int. Cl.: D06F 58/24, D06F 58/10, D06F 69/00, D06F 58/00, D06F 58/20, D06F 58/30, A47B 35/00, D06F 81/00, D06F 103/08, D06F 103/36, D06F 103/50, D06F 105/24, D06F 105/26

(54) **LAUNDRY HANDLING APPARATUS**
WÄSCHEHANDHABUNGSVORRICHTUNG
APPAREIL DE TRAITEMENT DE LINGE

(30) Priority: 24.05.2017 KR 20170064248
(43) Date of publication of application: 08.04.2020
(73) Proprietor: LG Electronics Inc., Seoul 07336 (KR)
(72) Inventor: LEE, Kyungah, Seoul 08592 (KR); KIM, Hyewon, Seoul 08592 (KR); LEE, Junghwan, Seoul 08592 (KR); YOO, Taewoo, Seoul 08592 (KR)
(74) Representative: Ter Meer Steinmeister & Partner
(86) International application number: PCT/KR2018/005899
(87) International publication number: WO 2018/217033

(56) References cited:
- KR-A- 20110 067 888
- KR-A- 20110 084 006
- KR-A- 20150 065 297
- KR-A- 20150 065 297
- KR-A- 20160 089 669
- KR-B1- 100 826 205
- KR-B1- 100 826 205
- US-A1- 2006 090 524
- US-A1- 2009 113 741

## Description

### BACKGROUND OF THE INVENTION

### 1. Field of the invention

The present disclosure relates to a laundry treatment apparatus, and more particularly, to a laundry treatment apparatus for drying and ironing of laundry.

### 2. Description of the Related Art

Generally, washing machines, which sequentially perform washing, rinsing, and spin-drying operations, are a typical example of the laundry treatment apparatus.

The washing machine is generally classified into a top-loading washing machine and a front-loading washing machine (also called a drum washing machine). The top-loading washing machine performs washing of laundry by using a rotating water stream generated in wash water. Further, the front-loading washing machine performs washing of laundry by friction between laundry items that is generated when the laundry items are lifted and dropped by a lifter installed at an inner circumference of a drum.

After main washing of laundry is performed by the washing machine, it is required to dry and iron the laundry.

For ironing of the laundry, a laundry drying machine has been developed, which is provided separately from the washing machine. The drying machine has an external appearance similar to the washing machine, and a typical example of the drying machine is a mechanical dryer in which the laundry is dried inside the drying machine.

However, in the case where the laundry is dried using a clotheshorse placed inside the house without using the mechanical dryer, there is a problem in that water vapor generated in the course of drying the laundry makes the indoor air too humid, such that a drying time of the laundry gets longer.

Further, there is also a problem in that after the laundry is dried using a clotheshorse, it is required to separately provide an iron and an ironing board to iron the laundry.

US 2006/090524 A1 relates to a multi-functional laundry device capable of treating the laundry efficiently and controlling method for the same, comprising a washing unit for washing the laundry, a drying unit integrated with the washing unit as one body for after-washing treatment including smoothing out wrinkles, and drying and keeping the laundry, and a control unit provided at either of the washing unit and the drying unit for controlling the washing unit and the dry unit.

US 2009/113741 A1 presents a laundry treating machine that includes a case having a laundry receiving space for receiving laundry defined therein, the case being located above another laundry treating machine, a hot air supply unit for supplying hot air into the laundry receiving space, a manipulation part for allowing a user to select a drive course, a control unit for controlling the hot air supply unit to be driven according to the course selected by the manipulation part, and a guide unit for assisting the user to put the laundry in the laundry receiving space.

KR 2015 0065297 A relates to a garment treating apparatus, which comprises: a cabinet equipped with a storage space for storing garments; a supply unit for supplying at least one from air or moisture to the inside of the storage space; a support unit provided inside the storage space for providing a support space supporting the surface of garments; a guide fixed and installed inside the storage space, and setting the range of movement of garments to prevent escape thereof from the support space; and a pressing unit detachably installed on the support unit for pressing garments positioned in the support space.

KR 100 826 205 B1 A presents a laundry dryer to dry delicate laundry such as a knit and a Y-shirt by drying the laundry in a state that the laundry are fixed and to sterilize laundry with relatively low temperature of air. The laundry dryer comprises a cabinet, a heat pump, and an ironing unit. The ironing unit is pulled in and out from the cabinet, and irons the laundry. The ironing unit has a moving unit having a heating member, and a storage unit having a compressing unit. The moving unit can be pulled in and out from the ironing unit. The storage unit selectively contains the moving unit. The compressing unit has a roller and a roller guide. The roller guide guides the roller.

### SUMMARY OF THE INVENTION

One or more objects of the present technique are achieved by subject-matter of the independent claim. The invention is set out in the appended claims.

It is a first object of the present invention to provide a laundry treatment apparatus which may dry laundry by sending air to the laundry while the laundry is hung on a hanger, and may dehumidify surrounding air of the laundry when drying the laundry, thereby reducing a drying time of the laundry.

It is a second object of the present invention to provide a laundry treatment apparatus which may reduce a drying time of the laundry by optimizing a flow of air sent to the laundry and a flow of the dehumidified air discharged around the laundry.

It is a third object of the present invention to provide a laundry treatment apparatus, in which an ironing board may be put on a flat surface for ironing of the laundry.

It is a fourth object of the present invention to provide a laundry treatment apparatus, in which while an ironing device to iron the laundry is placed near a position where the ironing board is put, the ironing device may be charged via wireless charging.

It is a fifth object of the present invention to provide a laundry treatment apparatus, in which the ironing board may be stored.

It is a sixth object of the present invention to provide a laundry treatment apparatus, in which condensate water, generated when the surrounding air of the laundry is dehumidified, may be easily removed from a condensate water container that stores the condensate water.

It is a seventh object of the present invention to provide a laundry treatment apparatus, in which the ironing device may be stored.

It is an eighth object of the present invention to provide a laundry treatment apparatus, which may reduce power consumption when the laundry is dried.

In order to achieve the first object of the present invention, in accordance with an aspect of the present invention, there is provided a laundry treatment apparatus including: a cabinet having an air inlet; a dehumidifying unit which is disposed inside the cabinet, and dehumidifies air suctioned into the cabinet through the air inlet; a first blower unit which is disposed at a top portion of the cabinet, and discharges the air dehumidified in the cabinet by the dehumidifying unit; and a second blower unit which is disposed over the cabinet with a distance therebetween, has a hanging part on which a hanger is hung, and suctions air to send the air to the laundry hung on the hanger.

In order to achieve the second object of the present invention, the laundry treatment apparatus may include: the first blower unit which is disposed below and rearward of the hanging part, and discharges the dehumidified air forward; and the second blower unit which discharges air forward and downward from a rear side of the hanging part.

In order to achieve the third object of the present invention, the cabinet may have a flat top surface.

In order to achieve the fourth object of the present invention, the laundry treatment apparatus may further include a wireless charging unit which is installed at the top portion of the cabinet, and a top surface of which is at the same height as the top surface of the cabinet, such that the two top surfaces are disposed horizontal to each other.

In order to achieve the fifth object of the present invention, the laundry treatment apparatus may further include a first storage space, which is opened and closed by sliding forward and rearward in the cabinet, and which stores an ironing board.

In order to achieve the sixth object of the present invention, the laundry treatment apparatus may further include a second storage space which is opened and closed by sliding forward and rearward in the cabinet, in which the second storage space has a first storage part including a condensate water container that stores condensate water generated by the dehumidifying unit.

In order to achieve the seventh object of the present invention, the second storage space may further include a second storage part which stores at least one of an iron, a streamer, and a remover.

In order to achieve the eighth object of the present invention, the laundry treatment apparatus may further include: a humidity sensor which senses a humidity value; and a controller, which in response to the humidity value sensed by the humidity sensor being equal to or greater than a predetermined value, operates the dehumidifying unit and the first blower unit, and in response to the humidity value sensed by the humidity sensor being lower than the predetermined value, stops the dehumidifying unit and the first blower unit.

### EFFECTS OF THE INVENTION

With respect to the first object of the present invention, the surrounding air of laundry remains to be dry by the dehumidified air discharged by the first blower unit, and the laundry is dried by air discharged by the second blower unit, thereby reducing a drying time of the laundry.

With respect to the second object of the present invention, the first blower unit discharges the dehumidified air downward of the laundry, and the second blower unit discharges the air toward a portion where the dehumidified air, discharged by the first blower unit, is present, thereby reducing a drying time of the laundry.

With respect to the third object of the present invention, an ironing board may be put on the flat top surface of the cabinet for ironing of the laundry.

With respect to the fourth object of the present invention, an ironing device may be placed on a wireless charging unit for wireless charging.

With respect to the fifth object of the present invention, the ironing board may be stored in the first storage space, and may be taken out from the first storage space to be immediately available for use in ironing of laundry.

With respect to the sixth object of the present invention, a condensate water container may be taken out from the second storage space, and condensate water stored in the condensate water container may be easily removed from the condensate water container.

With respect to the seventh object of the present invention, at least one of an iron, a steamer, and a remover may be taken out from the second storage space to be immediately available for use in ironing of laundry.

With respect to the eighth object of the present invention, the dehumidifying unit and the first blower unit repeatedly operate and stop according to a surrounding humidity of the laundry when the laundry is dried, thereby reducing power consumption.

### BRIEF DESCRIPTION OF THE DRAWINGS

FIG. 1 is a perspective view illustrating an operation state of a laundry treatment apparatus according to an embodiment of the present disclosure.
FIG. 2 is a side cross-sectional view illustrating a dehumidifying and ironing module illustrated in FIG. 1.
FIG. 3 is a view illustrating a dehumidifying unit illustrated in FIG. 2.
FIG. 4 is a view illustrating a first storage space which is opened in the dehumidifying and ironing module illustrated in FIG. 1.
FIG. 5 is a view illustrating a second storage space which is opened in the dehumidifying and ironing module illustrated in FIG. 1.
FIG. 6 is a control block diagram illustrating a laundry treatment apparatus according to an embodiment of the present disclosure.

### DETAILED DESCRIPTION OF THE PREFERRED EMBODIMENTS

Hereinafter, a laundry treatment apparatus according to embodiments of the present disclosure will be described with reference to accompanying drawings.

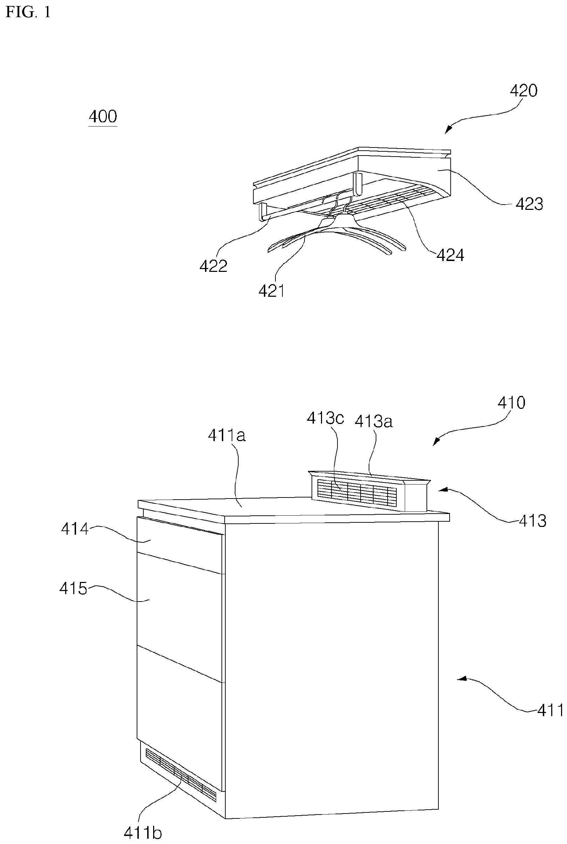

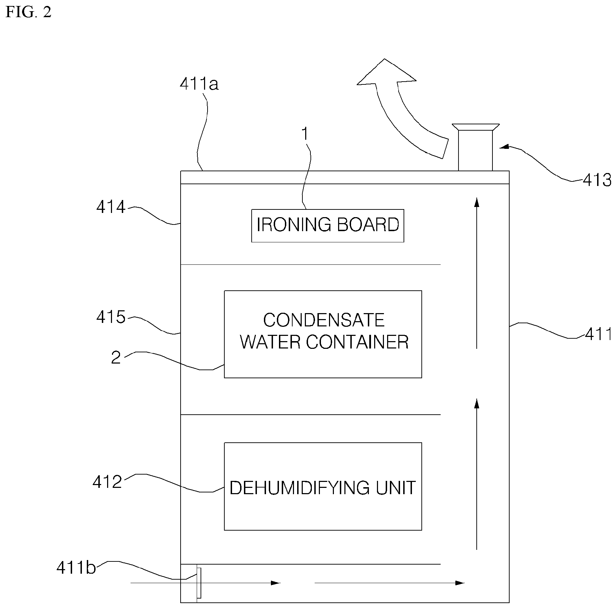

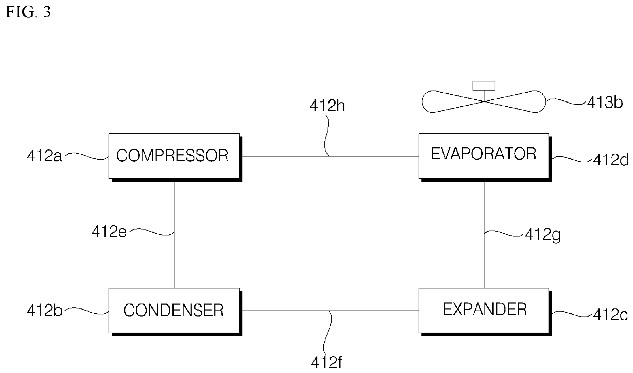

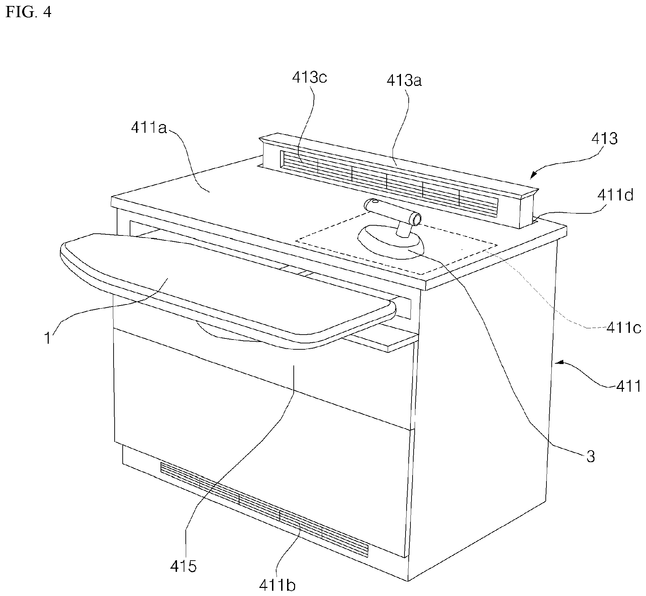

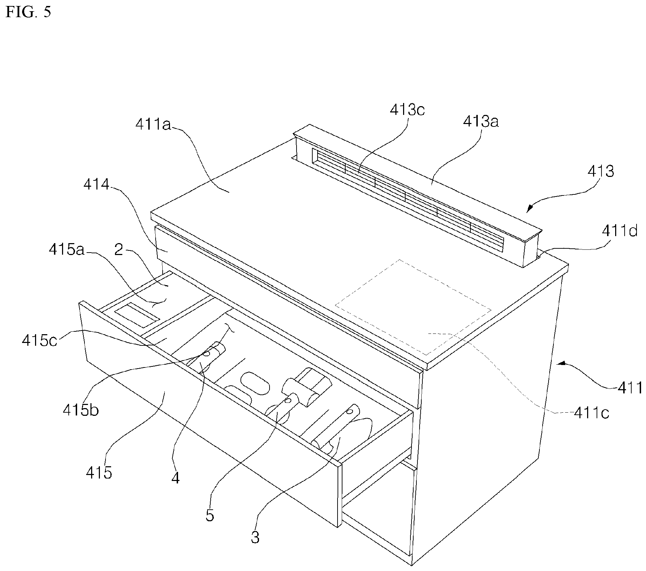

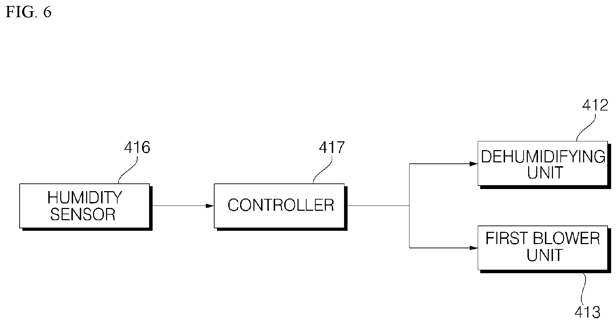

FIG. 1 is a perspective view illustrating an operation state of a laundry treatment apparatus according to an embodiment of the present disclosure; FIG. 2 is a side cross-sectional view illustrating a dehumidifying and ironing module illustrated in FIG. 1; FIG. 3 is a view illustrating a dehumidifying unit illustrated in FIG. 2; FIG. 4 is a view illustrating a first storage space which is opened in the dehumidifying and ironing module illustrated in FIG. 1; FIG. 5 is a view illustrating a second storage space which is opened in the dehumidifying and ironing module illustrated in FIG. 1; and FIG. 6 is a control block diagram illustrating a laundry treatment apparatus according to an embodiment of the present disclosure.

Referring to FIGS. 1 to 6, the laundry treatment apparatus 400 includes a dehumidifying and ironing module 410 and a drying module 420.

The dehumidifying and ironing module 410 may be installed on an indoor floor surface, and the drying module 420 may be installed on the indoor wall or the ceiling.

The dehumidifying and ironing module 410 may suction and dehumidify indoor air, and may discharge the dehumidified air. Further, the dehumidifying and ironing module 410 may provide a space to iron laundry.

The drying module 420 includes a hanging part 422, on which a hanger 421 is hung, and may suction indoor air to send the suctioned air to laundry hung on the hanger 421. The laundry hung on the hanger 421 may be dried by air sent by the drying module 420.

The dehumidifying and ironing module 410 includes a cabinet 411, a dehumidifying unit 412 installed at the cabinet 411, and a first blower unit 413 installed at the top of the cabinet 411.

The cabinet 411 may be formed in a hexahedral shape and has an open front surface and a cavity. The cabinet 411 may include a second upper panel 411a which is disposed on the top of the cabinet 411. The second upper panel 411a may form the top surface of the cabinet 411, and is formed in a flat square shape. The top surface of the cabinet 411 is formed to be flat with the second upper panel 411a. A user may put an ironing board 1 on the flat top surface of the cabinet 411, and put laundry on the ironing board 1 to iron the laundry.

A first storage space 414 and a second storage space 415 may be provided at the open front surface of the cabinet 411. The first storage space 414 may be disposed above the second storage space 415; and the second storage space 415 may be disposed below the first storage space 414.

The first storage space 414 may be opened and closed by sliding forward and rearward in the cabinet 411, and the second storage space 415 may also be opened and closed by sliding forward and rearward in the cabinet 411. When opened, the first storage space 414 may protrude forward from the cabinet 411, and when closed, the first storage space 415 may be inserted into the cavity of the cabinet 411. When opened, the second storage space 415 may also protrude forward from the cabinet 411, and when closed, the second storage space 415 may also be inserted into the cavity of the cabinet 411.

The first storage space 414 may store the ironing board 1. When a user wishes to iron laundry, the user may open the first storage space 414, take out the ironing board 1, and put the ironing board 1 on the top surface of the cabinet 411 to iron the laundry.

The second storage space 415 may include a first storage part 415a and a second storage part 415b. The first storage part 415a and the second storage part 415b may be divided by a partition wall 415c installed at the second storage space 415.

The first storage part 415a may include a condensate water container 2, and the second storage part 415b may include at least one of an iron 3, a steamer 4, and a remover 5.

The condensate water container 2 may be a container that stores condensate water generated when the dehumidifying unit 412 dehumidifies indoor air.

The iron 3 may be a device for ironing laundry by converting electric power into heat. The iron 3 may have a stream spray function. A user may put the laundry on the ironing board 1, to iron the laundry by using the iron 3.

The steamer 4 is a device for ironing the laundry by spraying high-temperature steam into the laundry. While hanging the laundry on the hanger 421 and hanging the hanger 421 on a hanging part 422, a user may spray high-temperature steam on the laundry with the steamer 4 to iron the laundry.

The remover 5 is a device for tearing off foreign materials such as fluff. While hanging the laundry on the hanger 421 and hanging the hanger 421 on a hanging part 422, a user may rub the remover 5 on the laundry to remove fluff from the laundry.

A wireless charging unit 411c may be installed on the top of the cabinet 411. The wireless charging unit 411c may include a wireless charging coil (not shown). The wireless charging unit 411c may be disposed horizontal to the cabinet 411 with a top surface of the wireless charging unit 411c being at the same height as a top surface of the cabinet 411. The wireless charging unit 411c may be inserted into the second upper panel 411a.

The ironing devices, such as the iron 3, the steamer 4, and the remover 5, may be placed on the top of the wireless charging unit 411c for wireless charging. The iron 3, the steamer 4, and the remover 5 each have a battery, and desirably a coil which electrically reacts with the wireless charging coil to charge the battery.

A suction grille 411b may be disposed at the cabinet 411. The suction grille 411b may form a plurality of air inlets. The suction grille 411b may be construed as having the same meaning as the air inlet. In the embodiment, the air inlet is formed on the front surface of the cabinet 411, but is not limited thereto, and may be formed on at least one of the front surface, the lateral surface, and the rear surface of the cabinet 411. Hereinafter, description will be made by using a case where the air inlet is formed on the front surface of the cabinet 411.

The suction grille 411b is disposed below the second storage space 415. The cabinet 411 may suction air thereinto through the suction grille 411b.

The dehumidifying unit 412 is disposed inside the cabinet 411 to dehumidify air suctioned into the cabinet 411 through the suction grille 411b. The dehumidifying unit 412 may have a cooling cycle circuit using a refrigerant. That is, the dehumidifying unit 412 may include a compressor 412a, a condenser 412b, an expander 412c, and an evaporator 412d. The compressor 412a may compress a refrigerant; the condenser 412b may condense the refrigerant compressed by the compressor 412a; the expander 412c may expand the refrigerant condensed by the condenser 412b; and the evaporator 412d may evaporate the refrigerant expanded by the expander 412c.

The evaporator 412d may cool and dehumidify the air suctioned into the cabinet 411 through the suction grille 411b by heat-exchanging. In the case where the evaporator 412d cools the air inside the cabinet 411, water vapor contained in the air of the cabinet 411 is cooled and changed into condensate water, and the condensate water may be formed on the evaporator 412d. The condensate water container 2 is disposed below the evaporator 412d to receive and store the condensate water dropping from the evaporator 412d.

The compressor 412a and the condenser 412b may be connected to each other through a first refrigerant pipe 412e. The condenser 412b and the expander 412c may be connected to each other through a second refrigerant pipe 412f. The expander 412c and the evaporator 412d may be connected to each other through a third refrigerant pipe 412g. The evaporator 412d and the compressor 412a may be connected to each other through a fourth refrigerant pipe 412h. The refrigerant may circulate by sequentially passing the compressor 412a, the first refrigerant pipe 412e, the condenser 412b, the second refrigerant pipe 412f, the expander 412c, the third refrigerant pipe 412e, the evaporator 412d, and the fourth refrigerant pipe 412h.

The first blower unit 413 according to the invention discharges the air, dehumidified in the cabinet 411 by the dehumidifying unit 412, to the outside of the cabinet 411. When operating, the first blower unit 413 is, according to the invention, drawn out of the cabinet 411, and when stopping the operation, the first blower unit 413 is, according to the invention, inserted into the cabinet 411. When operating, the first blower unit 413 may be drawn out of the cabinet 411 to protrude upward from the cabinet 411. According to the invention, when stopping the operation, the first blower unit 413 is inserted into the cabinet 411, such that the top surface of the first blower unit 413 is horizontal to the top surface of the cabinet 411.

An access hole 411d, through which the first blower unit 413 may pass, is formed on the top of the cabinet 411. The access hole 411d is formed close to a rear end of the second upper panel 411a, such that a sufficient area may be provided on the second upper panel 411a to place the ironing board 1 in front of the access hole 411d.

The first blower unit 413 may include a case 413a, and a fan 413b which suctions the air, dehumidified in the cabinet 411 by the dehumidifying unit 412, into the case 413a.

A discharge grille 413c may be installed at the front surface of the case 413a. The discharge grille 413c may form a plurality of air outlets. The discharge grille 413c may be construed as having the same meaning as the air outlet. It is desired that the case 413 has an open lower end, so that the dehumidified air, sent by the fan 413b, may be suctioned into the case 413a.

The fan 413b may be installed inside the cabinet 411, and may rotate by a driving force of a motor (not shown). The fan 413b may be disposed above the evaporator 412d, and may be disposed below the case 413a. The fan 413b may be vertically interposed between the case 413a and the evaporator 412d. The fan 413b may have a rotation axis which is vertically disposed. When rotating, the fan 413b may suction the air, which is dehumidified in the cabinet 411 by the evaporator 412d, to send the suctioned air into the case 413a; and the case 413a may discharge the dehumidified air sent by the fan 413b forward of the case 413a through the discharge grille 413c.

When the fan 413b operates, the case 413a protrudes upward from the cabinet 411 through the access hole 411d formed on the second upper panel 411a, so as to discharge the dehumidified air sent by the fan 413b to the outside of the case 413a through the discharge grille 413c. Further, when the fan 413b stops operating, the case 413a may be inserted into the cabinet 411 through the access hole 411d. In the case where the case 413a is completely inserted into the cabinet 411 through the access hole 411d, the top surface of the case 413a is disposed horizontal to the top surface of the second upper panel 411a.

It is desired that the case 413a may be installed to be movable upward and downward of the second upper panel 411a, so that when the fan 413b operates, the case 413a may protrude upward from the cabinet 411, and when the fan 413b stops operating, the case 413a may be inserted into the case 411.

The drying module 420 may include a second blower unit 423 and a hanging part 422 installed at the second blower unit 423. The second blower unit 423suctions indoor air to send the air to laundry hung on the hanging part 422 by using the hanger 421. The laundry may be dried by the air sent by the second blower unit 423.

As air surrounding the laundry remains to be dry by using the dehumidified air which is discharged by the first blower unit 413, and the laundry is dried by the air discharged by the second blower unit 423, a drying time of the laundry may be reduced.

The second blower unit 423may include: a housing (not shown) having an air inlet (not shown) and an air outlet (not shown); and a fan (not shown) which is disposed inside the housing to suction air, suctioned into the housing through the air inlet, and to send the air through the air outlet. A discharge grille 424 is disposed at a rear lower portion of the second blower unit 423. The discharge grille 424 forms a plurality of the air inlets. The discharge grille 424 is tilted with a front end being disposed higher than a rear end, so as to discharge air forward and downward.

The first blower unit 413 is disposed below and rearward of the hanging part 422, such that the first blower unit 413 may discharge the dehumidified air forward. Further, the second blower unit 423may discharge air forward and downward from the rear side of the hanging part 422.

The first blower unit 413 discharges the dehumidified air downward of the laundry, and the second blower unit 423discharges air toward a portion where the dehumidified air, discharged by the first blower unit 413, is present. Accordingly, the air, which is sent by the second blower unit 423to the laundry hung on the hanger 421, is mixed with vapor generated in the course of drying the laundry, and then meets the dehumidified air discharged by the first blower unit 413, thereby reducing a drying time of the laundry.

The ironing part 400 may further include a humidity sensor 416 and a controller 417. The humidity sensor 416 may sense humidity values of surrounding air. The humidity values sensed by the humidity sensor 416 may be input to the controller 417. Upon receiving the humidity values sensed by the humidity sensor 416, the controller 417 may compare the humidity values with a predetermined value.

In the case where the humidity value input by the humidity sensor 416 is equal to or greater than the predetermined value, the controller 417 may operate the dehumidifying unit 412 and the first blower unit 413. Further, in the case where the humidity value input by the humidity sensor 416 is lower than the predetermined value, the controller 417 may stop the dehumidifying unit 412 and the first blower unit 413. Accordingly, when the dryer 400 dries the laundry, the dehumidifying unit 412 and the first blower unit 413 repeatedly operate and stop automatically according to the surrounding humidity of the laundry, thereby reducing power consumption.

It is desired that the humidity sensor 416 is installed close to the laundry hung on the hanging part 422 by using the hanger 421, so that the dehumidifying unit 412 and the first blower unit 413 may operate automatically only in the case where the humidity of the surrounding air of the laundry hung on the hanging part 422 by using the hanger 421 is equal to or greater than the predetermined value. Accordingly, it is desired that the humidity sensor 416 is installed at the second upper panel 411a on the top of the cabinet 411.

## Claims

1. A laundry treatment apparatus (400) comprising:
a cabinet (411) having an air inlet (411b);
a dehumidifying unit (412) which is disposed inside the cabinet (411), and configured to dehumidify air suctioned into the cabinet (411) through the air inlet (411b);
a first blower unit (413) which is disposed at a top portion of the cabinet (411), and configured to discharge the air dehumidified in the cabinet (411) by the dehumidifying unit (412) to an outside of the cabinet (411); and
a second blower unit (423) which is disposed over the cabinet (411) with a distance therebetween, has a hanging part (422) on which a hanger (421) is hung, and configured to suction air to send the air to the laundry hung on the hanger (421);
**characterized in that**:
when operating, the first blower unit (413) is configured to be drawn out of the cabinet (411), and when stopping operation, the first blower unit (413) is configured to be inserted into the cabinet (411) such that a surface of the first blower unit (413) is horizontal to a top surface of the cabinet (411).

2. The laundry treatment apparatus (400) of claim 1, wherein an access hole (411d), through which the first blower unit (413) passes, is provided at the top portion of the cabinet (411).

3. The laundry treatment apparatus (400) of claim 1, wherein the first blower unit (413) comprises:
a case (413a) having an air outlet; and
a fan (413b) configured to suction the air dehumidified in the cabinet (411) by the dehumidifying unit (412), and to send the air into the case (413a).

4. The laundry treatment apparatus (400) of claim 1, wherein:
the first blower unit (413) is disposed below and rearward of the hanging part (422), and configured to discharge the dehumidified air forward; and
the second blower unit (423) is configured to discharge air forward and downward from a rear side of the hanging part (422).

5. The laundry treatment apparatus (400) of claim 1, wherein the dehumidifying unit (412) comprises:
a compressor (412a) configured to compress a refrigerant;
a condenser (412b) configured to condense the refrigerant having passed through the compressor (412a);
an expander (412c) configured to expand the refrigerant having passed through the condenser (412b);
an evaporator (412d) configured to evaporate the refrigerant having passed through the expander (412c) and moving to the compressor (412a), and to dehumidify air by cooling the air suctioned into the cabinet (411).

6. The laundry treatment apparatus (400) of claim 1, wherein the air inlet (411b) is provided at a front surface of the cabinet (411).

7. The laundry treatment apparatus (400) of claim 1, wherein a top surface of the cabinet (411) is formed to be flat.

8. The laundry treatment apparatus (400) of claim 7, further comprising a wireless charging unit (411c) which is installed at the top portion of the cabinet (411), and a top surface of which is at the same height as the top surface of the cabinet (411), such that the two top surfaces are disposed horizontal to each other.

9. The laundry treatment apparatus (400) of claim 1, further comprising a first storage space (414) which is opened and closed by sliding forward and rearward in the cabinet (411), and which stores an ironing board (1).

10. The laundry treatment apparatus (400) of claim 1, further comprising a second storage space (415) which is opened and closed by sliding forward and rearward in the cabinet (411),
wherein the second storage space (415) has a first storage part (415a) including a condensate water container (2) which stores condensate water generated by the dehumidifying unit (412).

11. The laundry treatment apparatus (400) of claim 10, wherein the second storage space (415) further comprises a second storage part (415b) which stores at least one of an iron (3), a streamer (4), and a remover (5).

12. The laundry treatment apparatus (400) of claim 10, further comprising:
a humidity sensor (416) which senses a humidity value of surrounding air of the laundry hung on the hanger (421); and
a controller (417), which in response to the humidity value sensed by the humidity sensor (416) being equal to or greater than a predetermined value, operates the dehumidifying unit (412) and the first blower unit (413), and in response to the humidity value sensed by the humidity sensor (416) being lower than the predetermined value, stops the dehumidifying unit (412) and the first blower unit (413).

## Patentansprüche

1. Wäschebehandlungsvorrichtung (400), die Folgendes umfasst:
einen Schrank (411), der einen Lufteinlass (411b) aufweist;
eine Entfeuchtungseinheit (412), die in dem Schrank (411) angeordnet ist und konfiguriert ist, Luft, die durch den Lufteinlass (411b) in den Schrank (411) gesaugt wird, zu entfeuchten;
eine erste Gebläseeinheit (413), die an einem oberen Abschnitt des Schranks (411) angeordnet ist und konfiguriert ist, die Luft, die in dem Schrank (411) durch die Entfeuchtungseinheit (412) entfeuchtet wurde, zu einer Außenseite des Schranks (411) auszustoßen; und
eine zweite Gebläseeinheit (423), die mit einem Abstand dazwischen über dem Schrank (411) angeordnet ist, ein Aufhängungsteil (422) aufweist, an dem ein Kleiderbügel (421) aufgehängt ist, und konfiguriert ist, Luft anzusaugen, um die Luft zu der Wäsche, die auf dem Kleiderbügel (421) aufgehängt ist, zu leiten;
**dadurch gekennzeichnet, dass**:
die erste Gebläseeinheit (413) dann, wenn sie in Betrieb ist, konfiguriert ist, aus dem Schrank (411) gezogen zu werden, und dann, wenn ihr Betrieb angehalten wird, konfiguriert ist, derart in den Schrank (411) eingeführt zu werden, dass eine Oberfläche der ersten Gebläseeinheit (413) horizontal zu einer oberen Oberfläche des Schranks (411) ist.

2. Wäschebehandlungsvorrichtung (400) nach Anspruch 1, wobei eine Zugangsöffnung (411d), durch die die erste Gebläseeinheit (413) geführt wird, an dem oberen Abschnitt des Schranks (411) vorgesehen ist.

3. Wäschebehandlungsvorrichtung (400) nach Anspruch 1, wobei die erste Gebläseeinheit (413) Folgendes umfasst:
ein Gehäuse (413a), das einen Lufteinlass aufweist; und
einen Ventilator (413b), der konfiguriert ist, die Luft, die in dem Schrank (411) durch die Entfeuchtungseinheit (412) entfeuchtet wurde, anzusaugen und die Luft in das Gehäuse (413a) zu senden.

4. Wäschebehandlungsvorrichtung (400) nach Anspruch 1, wobei:
die erste Gebläseeinheit (413) unter und hinter dem Aufhängungsteil (422) angeordnet ist und konfiguriert ist, die entfeuchtete Luft nach vorne auszustoßen; und
die zweite Gebläseeinheit (423) konfiguriert ist, von einer Rückseite des Aufhängungsteils (422) Luft nach vorne und nach unten auszustoßen.

5. Wäschebehandlungsvorrichtung (400) nach Anspruch 1, wobei die Entfeuchtungseinheit (412) Folgendes umfasst:
einen Kompressor (412a), der konfiguriert ist, ein Kältemittel zu komprimieren;
einen Kondensator (412b), der konfiguriert ist, das Kältemittel, das durch den Kompressor (412a) geflossen ist, zu kondensieren;
eine Expansionsvorrichtung (412c), die konfiguriert ist, das Kältemittel, das durch den Kondensator (412b) geflossen ist, zu expandieren;
einen Verdampfer (412b), der konfiguriert ist, das Kältemittel, das durch die Expansionsvorrichtung (412c) geflossen ist und sich zu dem Kompressor (412a) bewegt, zu verdampfen, und Luft durch Kühlen der Luft, die in den Schrank (411) gesaugt wird, zu entfeuchten.

6. Wäschebehandlungsvorrichtung (400) nach Anspruch 1, wobei der Lufteinlass (411b) an einer vorderen Oberfläche des Schranks (411) vorgesehen ist.

7. Wäschebehandlungsvorrichtung (400) nach Anspruch 1, wobei eine obere Oberfläche des Schranks (411) flach ausgebildet ist.

8. Wäschebehandlungsvorrichtung (400) nach Anspruch 7, die ferner eine drahtlose Ladeeinheit (411c) umfasst, die an dem oberen Abschnitt des Schranks (411) installiert ist und deren obere Oberfläche sich auf derselben Höhe wie die obere Oberfläche des Schranks (411) befindet, so dass die zwei oberen Oberflächen horizontal zueinander angeordnet sind.

9. Wäschebehandlungsvorrichtung (400) nach Anspruch 1, die ferner einen ersten Aufbewahrungsraum (414) aufweist, der durch Vor- und Zurückschieben im Schrank (411) geöffnet und geschlossen wird, und in dem ein Bügelbrett (1) aufbewahrt wird.

10. Wäschebehandlungsvorrichtung (400) nach Anspruch 1, die ferner einen zweiten Aufbewahrungsraum (415) umfasst, der durch Vor- und Zurückschieben im Schrank (411) geöffnet und geschlossen wird,
wobei der zweite Aufbewahrungsraum (415) einen ersten Aufbewahrungsteil (415a) aufweist, der einen Kondenswasserbehälter (2) enthält, in dem Kondenswasser aufbewahrt wird, das durch die Entfeuchtungseinheit (412) erzeugt wird.

11. Wäschebehandlungsvorrichtung (400) nach Anspruch 10, wobei der zweite Aufbewahrungsraum (415) ferner einen zweiten Aufbewahrungsteil (415b) aufweist, in dem ein Bügeleisen (3), ein Dampfglätter (4) und ein Entferner (5) aufbewahrt wird.

12. Wäschebehandlungsvorrichtung (400) nach Anspruch 10, die ferner Folgendes umfasst:
einen Feuchtigkeitssensor (416), der einen Feuchtigkeitswert der Umgebungsluft der Wäsche, die auf dem Kleiderbügel (421) aufgehängt ist, erfasst; und
eine Steuereinrichtung (417), die als Antwort darauf, dass der Feuchtigkeitswert, der durch den Feuchtigkeitssensor (416) erfasst worden ist, größer oder gleich einem vorgegebenen Wert ist, die Entfeuchtungseinheit (412) und die erste Gebläseeinheit (413) betreibt, und als Antwort darauf, dass der Feuchtigkeitswert, der durch den Feuchtigkeitssensor (416) erfasst worden ist, kleiner ist als der vorgegebenen Wert, die Entfeuchtungseinheit (412) und die erste Gebläseeinheit (413) anhält.

## Revendications

1. Appareil de traitement de linge (400) comportant :
une carrosserie (411) ayant une entrée d'air (411b) ;
une unité de déshumidification (412) qui est disposée à l'intérieur de la carrosserie (411), et configurée pour déshumidifier de l'air aspiré dans la carrosserie (411) à travers l'entrée d'air (411b) ;
une première unité de soufflage (413) qui est disposée sur une portion supérieure de la carrosserie (411), et configurée pour évacuer l'air déshumidifié dans la carrosserie (411) par l'unité de déshumidification (412) vers un extérieur de la carrosserie (411) ; et
une seconde unité de soufflage (423) qui est disposée au-dessus de la carrosserie (411) avec une certaine distance entre celles-ci, a une partie d'accrochage (422) sur laquelle un élément de suspension (421) est accroché, et configurée pour aspirer de l'air de manière à envoyer l'air vers le linge accroché sur l'élément de suspension (421) ;
**caractérisé en ce que** :
lorsqu'elle fonctionne, la première unité de soufflage (413) est configurée pour être tirée à l'extérieur de la carrosserie (411), et lors d'un arrêt du fonctionnement, la première unité de soufflage (413) est configurée pour être insérée dans la carrosserie (411) de telle sorte qu'une surface de la première unité de soufflage (413) est horizontale par rapport à une surface supérieure de la carrosserie (411).

2. Appareil de traitement de linge (400) selon la revendication 1, dans lequel un trou d'accès (411d), à travers lequel la première unité de soufflage (413) passe, est prévu sur la portion supérieure de la carrosserie (411).

3. Appareil de traitement de linge (400) selon la revendication 1, dans lequel la première unité de soufflage (413) comporte :
un boîtier (413a) ayant une sortie d'air ; et
un ventilateur (413b) configuré pour aspirer l'air déshumidifié dans la carrosserie (411) par l'unité de déshumidification (412), et pour envoyer l'air dans le boîtier (413a).

4. Appareil de traitement de linge (400) selon la revendication 1, dans lequel :
la première unité de soufflage (413) est disposée sous la partie d'accrochage (422) et vers l'arrière de celle-ci, et configurée pour évacuer l'air déshumidifié vers l'avant ; et
la seconde unité de soufflage (423) est configurée pour évacuer l'air vers l'avant et vers le bas depuis un côté arrière de la partie d'accrochage (422).

5. Appareil de traitement de linge (400) selon la revendication 1, dans lequel l'unité de déshumidification (412) comporte :
un compresseur (412a) configuré pour comprimer un fluide frigorigène ;
un condenseur (412b) configuré pour condenser le fluide frigorigène ayant traversé le compresseur (412a) ;
un détendeur (412c) configuré pour détendre le fluide frigorigène ayant traversé le condenseur (412b) ;
un évaporateur (412d) configuré pour évaporer le fluide frigorigène ayant traversé le détendeur (412c) et en mouvement vers le compresseur (412a), et pour déshumidifier l'air en refroidissant l'air aspiré dans la carrosserie (411).

6. Appareil de traitement de linge (400) selon la revendication 1, dans lequel l'entrée d'air (411b) est agencée sur une surface avant de la carrosserie (411).

7. Appareil de traitement de linge (400) selon la revendication 1, dans lequel une surface supérieure de la carrosserie (411) est formée pour être plane.

8. Appareil de traitement de linge (400) selon la revendication 7, comportant en outre une unité de chargement sans fil (411c) qui est installée sur la portion supérieure de la carrosserie (411), et dont une surface supérieure est à la même hauteur que la surface supérieure de la carrosserie (411), de telle sorte que les deux surfaces supérieures sont disposées horizontales l'une par rapport à l'autre.

9. Appareil de traitement de linge (400) selon la revendication 1, comportant en outre un premier espace de stockage (414) qui est ouvert et fermé en coulissant vers l'avant et vers l'arrière dans la carrosserie (411), et qui contient une planche à repasser (1).

10. Appareil de traitement de linge (400) selon la revendication 1, comportant en outre un second espace de stockage (415) qui est ouvert et fermé en coulissant vers l'avant et vers l'arrière dans la carrosserie (411),
dans lequel le second espace de stockage (415) a une première partie de stockage (415a) incluant un conteneur d'eau de condensat (2) qui stocke de l'eau de condensat générée par l'unité de déshumidification (412).

11. Appareil de traitement de linge (400) selon la revendication 10, dans lequel le second espace de stockage (415) comporte en outre une seconde partie de stockage (415b) qui stocke au moins un élément parmi un fer à repasser (3), un dispositif de traitement à vapeur (4) et un extracteur (5).

12. Appareil de traitement de linge (400) selon la revendication 10, comportant en outre :
un capteur d'humidité (416) qui détecte une valeur d'humidité d'air ambiant du linge accroché sur l'élément de suspension (421) ; et
une commande (417) qui, en réponse à la valeur d'humidité détectée par le capteur d'humidité (416) étant égale ou supérieure à une valeur prédéterminée, fait fonctionner l'unité de déshumidification (412) et la première unité de soufflage (413), et en réponse à la valeur d'humidité détectée par le capteur d'humidité (416) étant inférieure à la valeur prédéterminée, arrête l'unité de déshumidification (412) et la première unité de soufflage (413).
